(19)

**Europäisches Patentamt**
**European Patent Office**
**Office européen des brevets**

(11) **EP 4 242 881 A1**

(12) **EUROPEAN PATENT APPLICATION**

(43) Date of publication:
**13.09.2023 Bulletin 2023/37**

(21) Application number: **22160830.0**

(22) Date of filing: **08.03.2022**

(51) International Patent Classification (IPC):
**G06F 17/18** (2006.01)

(52) Cooperative Patent Classification (CPC):
**G06F 17/18**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Skyline Communications NV**
**8870 Izegem (BE)**

(72) Inventor: **Deprez, Tobe, Roger, L**
**8500 Kortrijk (BE)**

(74) Representative: **IP HILLS NV**
**Hubert Frère-Orbanlaan 329**
**9000 Gent (BE)**

(54) **ONLINE DETECTION OF ANOMALOUS SUBSEQUENCES IN TIME SERIES**

(57) Example embodiments relate to a method for detecting an anomaly in a time series (220). The method comprises obtaining (201) a next value (260) of the time series, updating (202) a moving sequence (221) with the next value, and updating (203) moving subsequences (223, 224, 225) of distinct lengths from the moving sequence. The method further comprises, for each respective one of the distinct lengths, determining (204, 205) normalized metric distances between the moving subsequence and a set of benchmark subsequences, thereby obtaining sets of normalized metric distances (264) respectively associated with the distinct lengths. The method further comprises, if all normalized metric distances in at least one set (264) exceed a predetermined threshold value, retrieving previous values of the time series; and updating the sets of normalized metric distances with updated normalized metric distances. If all normalized metric distances in an updated set (266) of normalized metric distances exceed the predetermined threshold value, an anomaly is detected in the time series.

Fig. 2

EP 4 242 881 A1

**Description**

**Field of the Invention**

The present invention generally relates to, amongst others, anomaly detection in time series.

**Background of the Invention**

An anomaly in a time series is a subsequence of a time series that is substantially different compared to the other subsequences in the time series. As such, anomalies indicate abnormal behaviour of a metric during a certain period of a time series. Detection of such anomalies can for example be useful to discover anomalous heartbeat patterns in electrocardiograms, anomalous light curves emitted by astronomical objects, anomalous electrical power consumption, or faulty equipment.

Most algorithms for detecting anomalies in a time series are limited to offline detection of a fixed-length anomaly, i.e. limited to analysing subsequences of a fixed length within a completed time series. Additionally, most algorithms only detect the top anomaly, i.e. a subsequence that differs the most from the other possible subsequences in the time series. As a result, significant anomalous subsequences can remain undetected.

Some algorithms provide online detection of anomalies, i.e. while new datapoints are added to the time series. These algorithms are typically limited to detecting the top anomaly, they cannot guarantee the detection of an anomaly, can only detect fixed-length anomalies, and require the entire time series to be stored in memory or loaded into memory when a new datapoint is obtained. It is thus a problem to efficiently detect anomalies of various lengths in a time series while new datapoints are added to the time series.

**Summary of the Invention**

It is an object of the present invention, amongst others, to solve or alleviate the above identified challenges and problems by improving online detection of anomalies in a time series.

According to a first aspect, this object is achieved by a computer implemented method for detecting an anomaly in a time series. The method comprises obtaining a next value of the time series; updating a moving sequence of stored most recent values of the time series with the next value; and updating moving subsequences of distinct lengths from the moving sequence, wherein the moving subsequences end with the next value. The method further comprises, for each respective one of the distinct lengths, determining metric distances between the moving subsequence of the respective one of the distinct lengths and a set of benchmark subsequences of the respective one of the distinct lengths, thereby obtaining sets of metric distances respectively associated with the distinct lengths; and normalizing the metric distances in the sets of metric distances according to the respectively associated distinct lengths, thereby obtaining sets of normalized metric distances. The method further comprises, if all normalized metric distances in at least one set of normalized metric distances exceed a predetermined threshold value, retrieving previous values of the time series preceding the moving sequence; for each respective one of the distinct lengths, determining updated normalized metric distances between the moving subsequence of the respective one of the distinct lengths and all possible subsequences within the previous values, and updating the sets of normalized metric distances with the updated normalized metric distances. The method further comprises, if all normalized metric distances in an updated set of normalized metric distances exceed the predetermined threshold value, detecting an anomaly in the time series; else, expanding the respective set of benchmark subsequences with a select one of the possible subsequences having a minimal normalized metric distance. The method further comprises updating the predetermined threshold value based on the normalized metric distances.

When a next value of a time series is obtained, the method will detect if any of the moving subsequences ending with that next value is an anomaly. These moving subsequences are characterized by respective distinct lengths, i.e. different lengths. The distinct lengths may preferably be predetermined, for example based on typical variations of the values in the time series. The moving subsequences are updated from a moving sequence of stored most recent values of the time series. As such, the amount of most recent values that are stored, i.e. the length of the moving sequence, is at least equal to the largest distinct length. The moving sequence is updated each time a next value of the time series is obtained, i.e. the most recent value is appended to the moving sequence and the oldest value is removed. The moving sequence can for example be a fixed-length linear array or vector that includes the most recent values of the time series.

In addition to the moving sequence, one or more benchmark subsequences are stored. The length of each benchmark subsequence matches with the distinct length of one of the moving subsequences. A benchmark subsequence is a subsequence that is substantially similar to most subsequences in the time series. In other words, a benchmark subsequence characterizes a substantial portion of the time series. As such, a set of benchmark subsequences characterizes the majority of the time series or even the entire time series. This allows storing a memory-efficient representation of the time series, i.e. the set of benchmark subsequences, rather than the entire time series.

Metric distances are determined between each of the respective moving subsequences and a respective set of benchmark subsequences with matching lengths. In doing so, a set of one or more metric distances is obtained for every moving subsequence, i.e. for every distinct length. In other words, every set of metric distances is associated with a moving subsequence, and thus associated with the distinct length of said moving subsequence. The sets of metric distances are normalized according to these associated distinct lengths, thereby obtaining sets of normalized metric distances. This allows using a single predetermined threshold value to detect anomalies of various distinct lengths, as the normalized metric distances in the respective normalized sets of metric distances are directly comparable. The predetermined threshold value represents a minimal normalized metric distance indicative for an anomaly.

If all normalized metric distances in a set of normalized metric distances exceed the predetermined threshold value, the associated moving subsequence can be an anomaly. To verify that the associated moving subsequence is an anomaly, previous values of the time series are retrieved, i.e. the time series is retrieved. Normalized metric distances are then determined between each of the respective moving subsequences and all possible subsequences in the time series having the same length. The sets of normalized metric distances are then updated with these normalized metric distances.

If all normalized metric distances in such an updated set of normalized metric distances still exceed the predetermined threshold value, the associated moving subsequence is identified as an anomaly. Else, if at least one normalized metric distance in such an updated set of normalized metric distances is smaller than the predetermined threshold value, the associated moving subsequence is not identified as an anomaly. As such, retrieving the time series was unwarranted. To prevent this computationally expensive action in succeeding timesteps, the associated set of benchmark subsequences is expanded by adding the subsequence that has a minimal normalized metric distance to the respective moving subsequence that triggered the retrieving of the time series. In any case, the predetermined threshold value is updated based on the determined normalized metric distances prior to obtaining the succeeding value of the time series.

The method improves the memory-efficiency and reduces the required computing resources of online anomaly detection as only the moving sequence, the predetermined threshold value, and the benchmark subsequences are stored. This has the advantage that less memory is used and that the anomaly detection can be performed simultaneously for a plurality of time series. By retrieving the time series when the presence of an anomaly is presumed based on the benchmark subsequences, the detection of an anomaly above the predetermined threshold is guaranteed. This has the further advantage that all significant anomalies above the predetermined threshold can be detected, i.e. that the anomaly detection is not limited to detection of the top anomaly. It is a further advantage that the predetermined threshold value is updated automatically based on the time series. It is a further advantage that the anomaly detection can be performed on any kind of time series.

According to an embodiment, a set of benchmark subsequences of a distinct length can comprise one or more benchmark subsequences of previous values of the timeseries.

The previous values of the time series can include values of the time series that precede the moving sequence. Each benchmark subsequence can be stored as a distinct data structure, e.g. a linear array or vector. Alternatively, each set of benchmark subsequences can be stored as a distinct data structure, e.g. a matrix comprising the one or more benchmark subsequences of the set. The previous values can for example be stored on a hard drive, a database server, a network attached storage, NAS, or any other secondary storage medium known to the skilled person.

According to an embodiment, the sets of benchmark subsequences can be stored as an array of selected time series values and a collection of key-value pairs, wherefrom the respective one or more benchmark subsequences are obtainable.

The array of selected time series values can comprise the values of the time series that are included in the respective benchmark subsequences. In particular, the values can be sorted in order of occurrence in the time series. The collection of key-value pairs can comprise an entry for each one of the respective benchmark subsequences. The key of an entry can refer to the starting timestamp or timestep of the respective benchmark subsequence in the time series. The value of the entry can refer to the starting index of the respective benchmark subsequence in the array of selected time series values. This allows storing the benchmark subsequences more efficiently as values of overlapping benchmark subsequences, i.e. duplicate values, are stored only once. This further allows storing benchmark subsequences of different lengths in a single data structure.

According to an embodiment, the normalized metric distance between at least 80%, preferably at least 90%, more preferably at least 99% of all possible subsequences in the time series and at least one benchmark subsequence can be smaller than a selection threshold.

In other words, a substantial amount of all possible subsequences in the time series can be closer than the selection threshold to at least one benchmark subsequence. As such, the benchmark subsequences can be representative for a majority of the time series. The selection threshold value can for example be at most 99%, more preferably at most 75%, more preferably at most 60% of the predetermined threshold value. Preferably, the selection threshold can be iteratively adjusted to optimize the balance between memory usage and unwarranted retrieval of the time series.

According to an embodiment, the method can further comprise initializing the predetermined threshold value and obtaining the sets of benchmark subsequences during an initialization step, based on the stored previous values of the time series.

The initialization step can be performed prior to the anomaly detection. The predetermined threshold value and benchmark subsequences can respectively be determined based on the previous anomalies in the time series and the selection threshold. In doing so, anomalies can be detected without substantial manual configuration as the predetermined threshold value and the benchmark subsequences are initialized automatically. Additionally, anomalies can be detected in any time series as the initialization step can be based on previous values of the time series. It is a further advantage that the anomaly detection can be performed on any time series without substantial configuration.

According to an embodiment, initializing the predetermined threshold value for a time series can comprise obtaining stored previous values of the time series; for each respective one of the distinct lengths, determining the normalized metric distance between each subsequence of the respective one of the distinct lengths in the time series and all non-overlapping subsequences of the respective one of the distinct lengths in the time series, thereby obtaining a set of normalized metric distances in the time series; and setting the predetermined threshold value to a predetermined percentile of the set of normalized metric distances.

During the initialization step, previous values of a time series can be retrieved. Based on these previous values, normalized metric distances can be determined between each subsequence of the time series and all other non-overlapping subsequences of equal length. This can be repeated for each one of the distinct lengths. As such, a set of normalized metric distances can be obtained. The predetermined threshold value can be set to a predetermined percentile of this set.

According to an embodiment, determining the normalized metric distances during the initialization step can be based on a triangular matrix with cumulative inner products of subsequences in the time series, and a vector with cumulative sums of subsequences in the time series to speed-up the initialization step.

The triangular matrix and the vector allow to determine the inner product of two subsequences, the mean of a subsequence, and the variance of a subsequence. This can reduce the execution time of determining metric distances between subsequences, i.e. speed-up the distance calculations. It is a further advantage that the initialization step can be expedited and the initialization step can be more computationally efficient.

According to an embodiment, the determining of metric distances can be interrupted when for each respective one of the distinct lengths at least one normalized metric distance is determined that is smaller than the predetermined threshold value.

This determining of metric distances can be between a moving subsequence and a set of benchmark subsequences, and/or between a moving subsequence and the entire time series. The determining of metric distances can preferably be interrupted for a respective distinct length upon determining a normalized metric distance smaller than the predetermined threshold value, as the respective moving subsequence can not be an anomaly. In doing so, futile distance calculations can be avoided thereby making the anomaly detection more computationally efficient.

According to an embodiment, the method can further comprise reselecting the sets of benchmark subsequences when the sets exceed a maximum size.

The amount of benchmark subsequences in the set may become too large over time as one or more sets of benchmark subsequences are expanded after every unwarranted retrieval of the entire time series. As such, all benchmark subsequences can be reselected when the sets of benchmark subsequences exceed a maximum size. The maximum size can for example be a maximum amount of subsequences, a maximum amount of stored values, or a maximum memory usage. This allows the anomaly detection to remain memory-efficient over time. The reselecting can for example be substantially similar to the obtaining of the sets of benchmark subsequences during the initialization step.

According to an embodiment, the method can further comprise postprocessing detected anomalies to remove overlaps with other detected anomalies.

Detected anomalies of respective distinct lengths can overlap as the moving subsequences partially overlap. The postprocessing can resolve such overlaps and can define the boundaries of the respective anomalies. The postprocessing can include, amongst others, merging one or more detected anomalies and setting the boundaries of the detected anomalies.

According to an embodiment, the distance metric can be a Euclidean distance, a z-normalized Euclidean distance, a centred Euclidean distance, or determined by dynamic time warping.

According to an embodiment, the distinct lengths can be between a minimum distinct length and a maximum distinct length.

According to an embodiment, a sequence can be represented as a symbolic aggregate approximate, SAX, representation, or a piecewise aggregate approximation, PAA, representation.

A sequence can relate to any one of a moving subsequence, a moving sequence, a benchmark subsequence, a subsequence within the previous values of a time series, an entire time series, or any other subsequence of a time series. By representing a sequence as a SAX or PAA representation, the number of distance calculations can be reduced by determining an efficient order for determining metric distances.

According to a second aspect, the invention relates to a data processing system configured to perform the computer implemented method according to the first aspect.

According to a third aspect, the invention relates to a computer program comprising instructions which, when the program is executed by a computer, cause the computer to perform the computer implemented method according to the first aspect.

According to a fourth aspect, the invention relates to a computer-readable medium comprising instructions which, when executed by a computer, cause the computer to perform the computer implemented method according to the first aspect.

## Brief Description of the Drawings

Fig. 1 shows a schematic representation of a telecommunications network and a time series of a metric related to the network according to an example embodiment;

Fig. 2 shows steps according to a computer implemented method for detecting an anomaly in a time series according to an embodiment;

Fig. 3A shows an example embodiment of a data structure for storing sets of benchmark subsequences;

Fig. 3B illustrates the determining of normalized metric distances between a moving subsequence and all possible subsequences of equal lengths in the time series according to an embodiment;

Fig. 4 shows steps according to a computer implemented method for initializing a predetermined threshold value and obtaining sets of benchmark subsequences during an initialization step according to an embodiment;

Fig. 5 shows steps according to a computer implemented method for detecting an anomaly in a time series according to an embodiment; and

Fig. 6 shows an example embodiment of a suitable computing system for performing steps according to example aspects of the invention.

## Detailed Description of Embodiment(s)

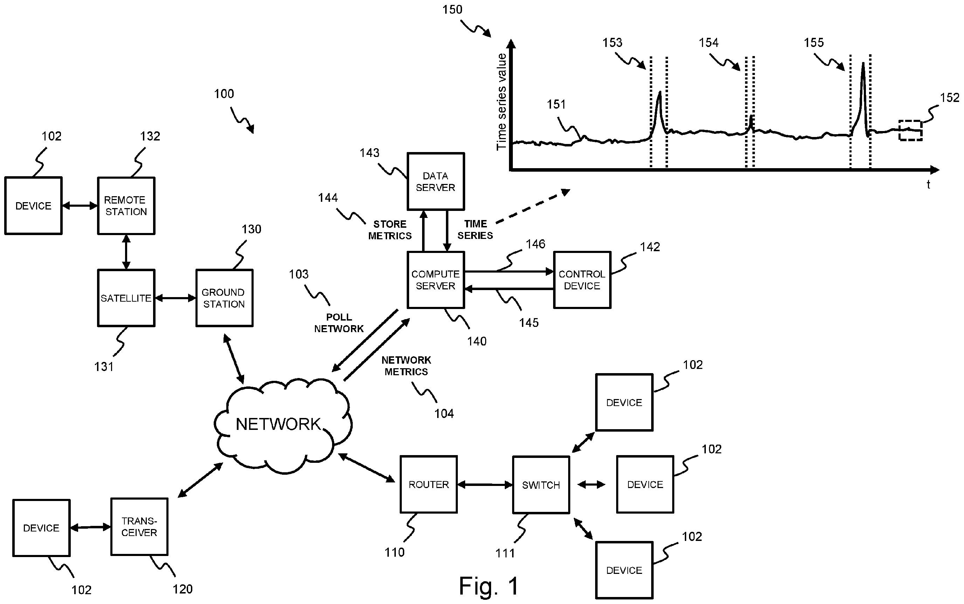

Fig. 1 shows a schematic representation of a telecommunications network 100. The telecommunications network 100 can comprise a plurality of nodes 102, 110, 111, 120, 130, 131, 132, 140, i.e. telecommunications equipment, that are interconnected for exchanging data. A node can be a redistribution point such as for example, amongst others, a router 110, a switch 111, a transceiver 120, a satellite ground station 130, a satellite 131, or a remote satellite station 132. A node can also be an endpoint such as a client device 102, e.g. a desktop, a laptop, a smartphone, a television, or a tablet.

The operation of each node 102, 110, 111, 120, 130, 131, 132, 140 in the network 100 can be characterized by one or more parameters, i.e. network metrics. Such network metrics can for example be indicative for, amongst others, an operational state of a node or a connection state of a node. Network metrics can for example be, amongst others, node activity, signal strength, signal to noise ratio, latency, jitter, packet loss, throughput, packet duplication, uptime, CPU utilization, memory interface, or any other network metric known to the skilled person.

These network metrics can be polled 103 at regular time intervals, e.g. by a computer program running on a compute server 140 connected to the network 100. The polled network metrics 104 can be stored 144 in a secondary memory or storage medium such as, for example, a database server 143 or a network attached storage, NAS. A control device 142 such as a desktop or a laptop can further provide an application and/or user interface to control 145 the network polling 103 and/or to monitor 146 the polled network metrics 104. By polling the network 100 in time, a time series 150 is obtained for every network metric 104. A time series 150 is a sequence of data points or values, i.e. network metric 151, indexed in time order. As a telecommunications network 100 typically includes a substantial amount of nodes, and each node is typically characterized by a plurality of network metrics, polling 103 the network will result in a large amount of time series 150.

The time series 150 shown in Fig. 1 further comprises three anomalies 153, 154, 155. An anomaly in a time series 150 is a subsequence that is substantially different compared to other subsequences in the time series 150, i.e. compared to the rest of time series 150. Thus, anomalies 153, 154, 155 can be indicative for extraordinary or unusual behaviour of network metric 151 during a period of time series 150. In the example of a telecommunications network 100, the anomalies 153, 154, 155 can for example be indicative for faulty network equipment or failing devices in the network 100.

It can be desirable to detect such anomalies 153, 154, 155 while new network metrics are being obtained, i.e. while the network is being polled 103. In other words, it can be desirable to detect that the most recent subsequence 152 of the time series 150 is an anomaly. Additionally, anomalies 153, 154, 155 can have various lengths. It can thus be desirable to detect whether any of a plurality of most recent subsequences 152, each having a distinct length, is an anomaly. The description below describes a computer implemented method to detect such anomalies while storing a limited amount of data, i.e. without large memory usage.

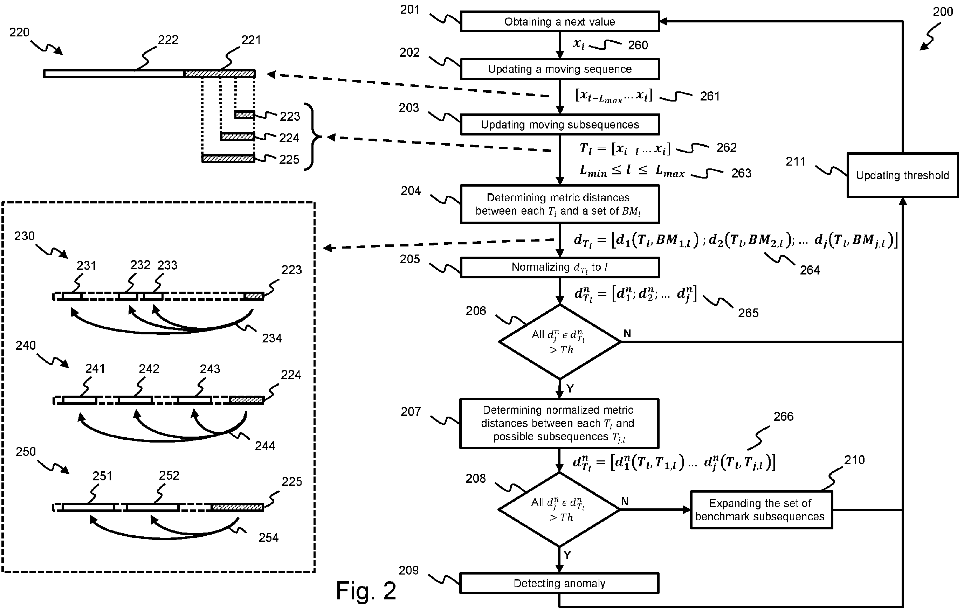

Fig. 2 shows steps 200 according to a computer implemented method for detecting an anomaly in a time series 220 according to an embodiment. During a first step 201, a next value $x_i$ 260 of the time series 220 is obtained, e.g. by polling a network device as described above. This next value $x_i$ 260 is used to update a moving sequence 221, 261 in a following step 202. The moving sequence 221, 261 comprises the most recent values of the time series and is kept in memory, for example as a fixed-length array $[x_{i-L_{max}} ...x_i]$ wherein $L_{max}$ is the length of the moving sequence 221, 261. It will be apparent to the skilled person that throughout this application, unless stated otherwise, memory refers to a memory that can be accessed substantially directly by a processor such as, for example, a primary memory such as random access memory, RAM, possibly interfaced through one or more cache memories. When a next value $x_i$ 260 of the time series 220 is obtained, the moving sequence 221, 261 can for example be updated by appending the next value $x_i$ 260 to the moving sequence 221, 261 and by removing the oldest value $x_{i-L_{max}-1}$.

In a following step 203, moving subsequences 223, 224, 225 are updated from the moving sequence 221, 261. All the respective moving subsequences 223, 224, 225 end with the next value $x_i$ 260 and are characterized by a respective distinct length $l$. The respective distinct lengths may preferably be predetermined, for example based on typical variations of the values $x$ in the time series 220. The respective distinct lengths of the moving subsequences 223, 224, 225 determine for which lengths anomalies can be detected. Updating the moving subsequences 223, 224, 225 thus results in a most recent subsequence $T_l = [x_{i-l} ...x_i]$ 262 for each distinct length $l$. Preferably, the distinct lengths can be between a minimum distinct length $L_{min}$ and a maximum distinct length $L_{max}$. As such, the amount of most recent values that is stored or kept in memory, i.e. the length of the moving sequence 221, 261, is at least equal to the maximum distinct length of the moving subsequences $L_{max}$.

In a next step 204, for each respective one of the distinct lengths $l$, metric distances 234, 244, 254 are determined between the moving subsequence $T_l$ 223, 224, 225 of the respective one of the distinct lengths and a set of benchmark subsequences $BM_l$ 230, 240, 250 of the respective one of the distinct lengths.

A set of benchmark subsequences 230, 240, 250 can preferably comprise one or more benchmark subsequences 231, 232, 233, 241, 242, 243, 251, 252 of previous values 222 of the timeseries 220. Each benchmark subsequence 231, 232, 233, 241, 242, 243, 251, 252 is characterized by a length that matches one of the respective distinct lengths of the moving subsequences 223, 224, 225. For example, the set of benchmark subsequences 230 comprises three benchmark subsequences 231, 232, 233 that have the same length as the respective moving subsequence 223.

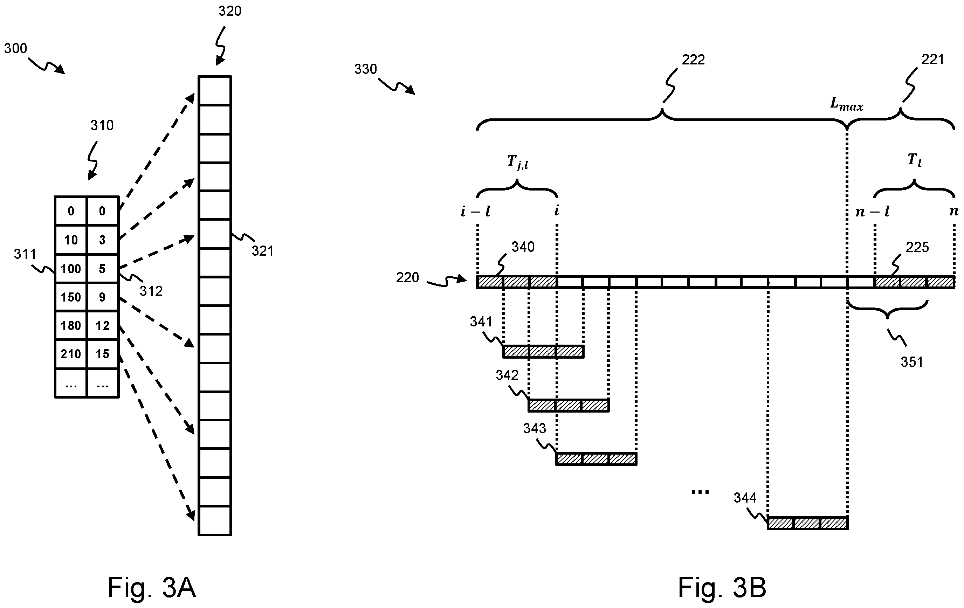

A benchmark subsequence 231, 232, 233, 241, 242, 243, 251, 252 is a subsequence of the time series 220 that is substantially similar to as many other subsequences in the time series 220 as possible. In other words, a benchmark subsequence is characteristic for a substantial portion of the time series 220. As such, a set of benchmark subsequences 230, 240, 250 can be representative for at least a majority of the time series 220, preferably representative for nearly the entire time series 220. The benchmark subsequences thus allow to determine whether the moving subsequences 223, 224, 225 can be anomalies by comparing the moving subsequences to a memory-efficient representation of the time series 220 rather than the entire time series 220. It will be apparent to the skilled person that the benchmark subsequences 231, 232, 233, 241, 242, 243, 251, 252 shown in Fig. 3 may comprise a substantially smaller portion of the entire time series 220, i.e. include substantially less datapoints relative to all datapoints in the time series 220.

Each benchmark subsequence 231, 232, 233, 241, 242, 243, 251, 252 can be stored as a distinct data structure, e.g. an array or a vector. Alternatively, each set of benchmark subsequences 230, 240, 250 can be stored as a distinct data structure, e.g. a matrix comprising the one or more benchmark subsequences 231, 232, 233, 241, 242, 243, 251, 252 of the respective set 230, 240, 250. Preferably, the benchmark subsequences 231, 232, 233, 241, 242, 243, 251, 252 from the respective sets 230, 240, 250 can be stored in a single data structure wherefrom the respective benchmark subsequences can be obtained.

Fig. 3A shows an example embodiment of such a single data structure 300 comprising an array of selected time series values 320 and a collection of key-value pairs 310. The array 320 can include values 321 of the time series 220 that are included in the respective benchmark subsequences. In particular, the values 321 may be sorted in order of occurrence in the time series 220. The collection of key-value pairs 310 can include an entry of a key 311 and a value 312 for each one of the respective benchmark subsequences. The key 311 of an entry can refer to the starting timestamp or timestep of the respective benchmark subsequence in the time series 220. The value 312 of the entry can refer to the starting index of the respective benchmark subsequence in the array 320 of selected time series values. For example, the entry 311, 312 indicates that the associated respective benchmark subsequence starts at timestep "100" in the time series 220, and that the corresponding time series values can be obtained starting from index "5" in the array 320. This allows the benchmark subsequences to be stored more efficiently as values of overlapping benchmark subsequences are stored only once, i.e. duplicate values of overlapping benchmark subsequences such as for example 232, 242, and 252 in Fig. 3. This allows to store benchmark subsequences of different lengths in a single data structure 300.

Returning to step 204 in Fig. 2, a set of metric distances $d_{T_l}$ 264 is obtained for each moving subsequence 223, 224, 225, i.e. for each distinct length, by determining the metric distances $d_j(T_l, BM_{j,l})$ 234, 244, 254 between each of the respective moving subsequences $T_l$ 223, 224, 225 and the respective set of benchmark subsequences $BM_{j,l}$ 230, 240, 250. In other words, each one of the sets of metric distances $d_{T_l}$ 264 is associated with a moving subsequence $T_l$ 223, 224, 225, and thus associated with the distinct length $l$ of said moving subsequence.

The determined metric distance 234, 244, 254 can preferably be a Euclidean distance, a z-normalized Euclidean distance, a centred Euclidean distance, or determined by dynamic time warping. Alternatively, any other metric distance can be used. The Euclidean distance between two subsequences $x$ and $y$ of equal length can for example be determined as

$$d_{Euclidean}(x, y) = \sqrt{\sum_i (x_i - y_i)^2} \qquad \text{(Eq. 1)}$$

wherein $x_i$ and $y_i$ respectively represent the values of the respective subsequences $x$ and $y$ at timestep $i$. The z-normalized Euclidean distance between two subsequences $x$ and $y$ can for example be determined as

$$d_{z-norm}(x, y) = \sqrt{\sum_i \left( \frac{x_i - \mu_x}{\sigma_x} - \frac{y_i - \mu_y}{\sigma_y} \right)^2} \qquad \text{(Eq. 2)}$$

wherein $\mu$ and $\sigma$ respectively represent the mean and standard deviation of the values in the respective subsequences $x$ and $y$. The centred Euclidean distance between two subsequences $x$ and $y$ can for example be determined as

$$d_{centred}(x, y) = \sqrt{\sum_i \left( (x_i - \mu_x) - (y_i - \mu_y) \right)^2} \qquad \text{(Eq. 3)}$$

In a next step 205, the sets of metric distances $d_{T_l}$ 264 are normalized according to the respective distinct lengths $l$ of the associated moving subsequences $T_l$ 223, 224, 225. For example, the set of metric distances 264 comprising the determined metric distances 234 between moving subsequence 223 and benchmark subsequences 231, 232, 233 is normalized according to the length of moving subsequence 223. In doing so, sets of normalized metric distances $d_{T_l}^n$ 265 are obtained. The centred Euclidean metric distance in Eq. 3 can for example be length-normalized by

$$d_{centred}^n(x, y) = \frac{d_{centred}(x,y)}{\sqrt{l}} \qquad \text{(Eq. 4)}$$

Alternatively, any other metric distance can be length-normalized by changing $d_{centred}(x,y)$ in Eq. 4 by said metric distance. By length-normalizing, the values of the normalized metric distances $d_j^n$ in the respective normalized sets can be compared directly.

In a following step 206, the normalized metric distances $d_j^n$ in the sets of normalized metric distances 265 are compared to a predetermined threshold value $Th$. The predetermined threshold value represents a minimal normalized metric distance indicative for an anomaly. As the normalized metric distances $d_j^n$ in the respective sets 265 can be compared directly, a single predetermined threshold value $Th$ can be used to detect anomalies of various distinct lengths, i.e. the respective distinct lengths $l$ of the moving subsequences $T_l$ 223, 224, 225. It is thus an advantage that only one predetermined threshold value is stored for a time series.

If all normalized metric distances $d_j^n$ in a set of normalized metric distances 265 exceed the predetermined threshold value $Th$, the associated moving subsequence 223, 224, 225 can be an anomaly. To verify or check that the associated moving subsequence 223, 224, 225 is indeed an anomaly, all previous values 222 of the time series 220 are retrieved in step 207, i.e. the entire time series 220 is retrieved. It will be apparent to the skilled person that 'the entire time series' and 'all previous values' refer to stored previous datapoints of a time series that are retrievable from a secondary memory or storage medium. A variety of possible subsequences can be selected from these previous values 222. Step 207 further includes determining the normalized metric distances between each of the respective moving subsequences 223, 224, 225 and all possible subsequences in the time series 220 that have a length equal to the distinct length of the respective moving subsequence 223, 224, 225.

Fig. 3B illustrates the determining 330 of normalized metric distances $d_j^n$ between a moving subsequence $T_l$ 225 and all possible subsequences $T_{j,l}$ 340, 341, 342, 343, 344 of equal length $l$ in the time series 220. The determining can for example start with determining the normalized metric distance $d_j^n$ between the moving subsequence $T_l$ 225 of length $l$ and a first possible subsequence $T_{j,l}$ 340 at position $j = i$ having an equal length $l$. This possible subsequence 340 can for example comprise the $l$ oldest values of the time series 220. Hereafter, the normalized metric distance $d_j^n$ between the moving subsequence $T_l$ 225 and each possible subsequence $T_{j,l}$ 341, 342, 343, 344 of length $l$ at respective positions $j = i + 1, i + 2, ..., n - l$ is determined, wherein $n$ is the length of the entire time series 220. These determined distances $d_j^n$ are then used to update, i.e. are added to, the respective set of normalized metric distances $d_{T_l}^n$. Thereby an updated set of normalized metric distances is obtained. This determining 330 is repeated for each one of the respective distinct lengths $l$, in particular in the order of the longest distinct length to the shortest distinct length.

The determining of normalized metric distances $d_j^n$ for a respective distinct length can preferably be interrupted upon obtaining a distance $d_j^n$ smaller than the predetermined threshold value $Th$, as the respective moving subsequence $T_l$ 225 can not be an anomaly in this case. As such, when at least one normalized metric distance $d_j^n$ is determined that is smaller than the predetermined threshold value $Th$ for each of the respective distinct lengths $l$, none of the moving subsequences can be an anomaly and the determining can preferably be interrupted. For example, the anomaly detection may in this case proceed to step 210 in Fig. 2. In doing so, futile distance calculations can be avoided thereby making the anomaly detection more computationally efficient.

Preferably, the determining 330 of normalized metric distances $d_j^n$ can start by first handling the possible subsequence $T_{j,l}$ at position $j$ with a minimal metric distance to the moving subsequence of the previous timestep 351, i.e. the moving subsequence 351 during the previous iteration of the anomaly detection. This can speed-up the anomaly detection by first handling the possible subsequence $T_{j,l}$ 340, 341, 342, 343, 344 with the highest probability to interrupt the distance calculations 300. In other words, this can speed-up the anomaly detection by first determining the metric distance $d_j^n$ most likely to be smaller than the predetermined threshold value $Th$. Preferably, this can be succeeded by handling the possible subsequence $T_{j,l}$ at position $j + 1$. This can further speed-up the anomaly detection by allowing to first handle possible subsequences $T_{j,l}$ 340, 341, 342, 343, 344 with substantially large sudden changes, e.g. sharp peaks or drops. Preferably, this can be succeeded by handling the possible subsequences $T_{j,l}$ 340, 341, 342, 343, 344 with constant values. This can further speed-up the anomaly detection by allowing to skip succeeding distance calculations between a moving subsequence $T_l$ of a shorter distinct length and possible subsequences $T_{j,l}$ comprising a selection or portion of these constant values, as these metric distances $d_j^n$ will be the same. Alternatively, determining the normalized metric distances $d_j^n$ can be performed by handling the possible subsequences 340, 341, 342, 343, 344 in a random order.

Any of the sequences can preferably be represented as a symbolic aggregate approximate, SAX, representation, or a piecewise aggregate approximation, PAA, representation. The sequences can further be structured in a HOTSAX table. The sequences can be, amongst others, a moving subsequence, a moving sequence, a benchmark subsequence, a subsequence within the previous values of a time series, an entire time series, or any other subsequence of a time series. Representing a sequence as a SAX or PAA representation allows to further reduce the number of distance calculations by determining an efficient order for determining the metric distances $d_j^n$ .

Returning to Fig. 2, the normalized metric distances $d_j^n$ in the updated sets of normalized metric distances 266 are then compared to the predetermined threshold value *Th* in step 208. If all normalized metric distances $d_j^n$ in an updated set 266 still exceed the predetermined threshold value *Th,* the respective moving subsequence 223, 224, 225 is confirmed to be an anomaly. An anomaly is thereby detected in the time series 220 in step 209.

If at least one normalized metric distance $d_j^n$ in such an updated set 266 is smaller than the predetermined threshold value *Th,* the respective moving subsequence $T_l$ 223, 224, 225 is not an anomaly. As such, the retrieving of the entire time series 220, i.e. loading the entire time series into memory, was unwarranted. To prevent this computationally expensive action in succeeding timesteps, the respective set of benchmark subsequences 230, 240, 250 is expanded in step 210. This can be achieved by adding the possible subsequence $T_{j,l}$ in the time series 220 associated with the minimal normalized metric distance $d_j^n$ in set 266 to the respective set of benchmark subsequences 230, 240, 250 that triggered the retrieval of the entire time series in step 206. In other words, the possible subsequence $T_{j,l}$ that is most similar to the moving subsequence $T_l$ 223, 224, 225 that triggered the retrieval of the entire time series 220 in step 206 is added to the respective set of benchmark subsequences 230, 240, 250.

Following step 206, 209, or 210, the predetermined threshold value *Th* is updated in step 211 based on the determined normalized metric distances $d_j^n$ . The predetermined threshold value *Th* is thus updated prior to obtaining the succeeding value of the time series 220. In other words, an iteration of the anomaly detection is completed by updating the predetermined threshold value *Th.*

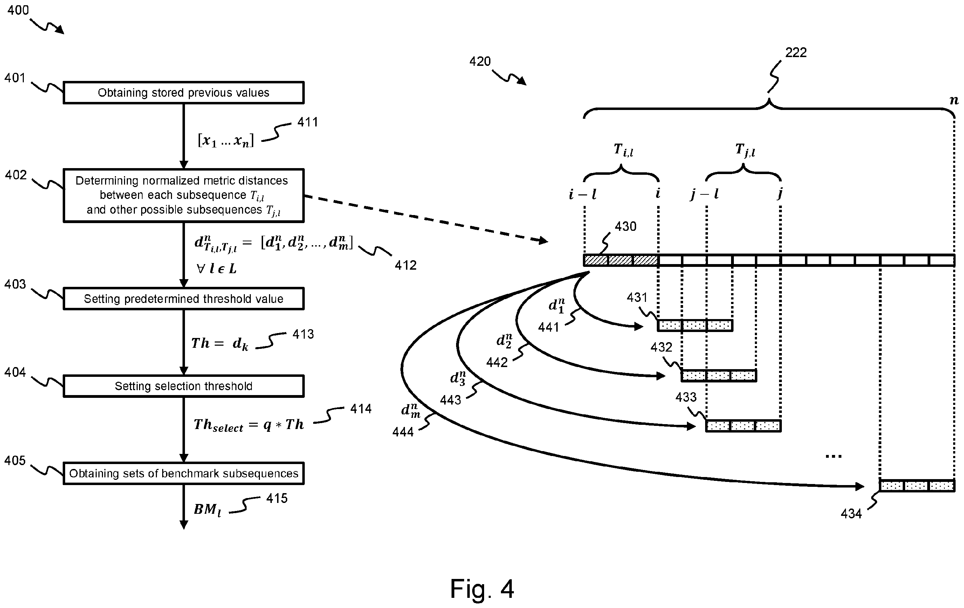

Fig. 4 shows steps 400 for initializing the predetermined threshold value *Th* 413 and obtaining the sets of benchmark subsequences 415 during an initialization step according to an embodiment. The initialization step can be performed prior to detecting anomalies in a time series, e.g. prior to performing steps 200 shown in Fig. 2. The initialization step can be based on the stored previous values 222 of the time series, which can be the entire time series when performing the initialization step for the first time. This allows to detect anomalies without substantial manual configuration or adjustment, e.g. by a user, as the predetermined threshold value 413 and the benchmark subsequences 415 are determined automatically. Additionally, anomalies can be detected for any time series. It is a further advantage that the anomaly detection can be performed on any time series without substantial configuration.

In a first step 401 of the initialization, the stored previous values 222 of the time series can be obtained, e.g. by loading the stored previous values 222 into memory. In a following step 402, normalized metric distances $d_{T_{i,l},T_{j,l}}^n$ can be determined between each subsequence $T_{i,l}$ 430, 431, 432, 433, 434 of the time series and all other non-overlapping subsequences $T_{j,l}$ of equal length in the time series. For example, the normalized metric distances 441, 442, 443, 444 between subsequence 430, i.e. $T_{i,l}$, and all other subsequences of equal length 431, 432, 433, 434, i.e. $T_{j,l}$, can first be determined. This can be repeated for each of the subsequences 431, 432, 433, 434 in the time series. In other words, subsequence $T_{i,l}$ can loop over the time series from position *i* to position *n*. This determining can further be performed for each one of the distinct lengths $l \in L$. The resulting normalized metric distances $d_{T_{i,l},T_{j,l}}^n$ can be added to a single set 412. In other words, set 412 can include all normalized metric distances $d_{T_{i,l},T_{j,l}}^n$ .

Alternatively, step 402 can further comprise determining the minimum normalized metric distance to all non-overlapping subsequences $T_{j,l}$ for each subsequence $T_{i,l}$ 430, 431, 432, 433, 434. In doing so, a minimum normalized metric distance can be obtained for each subsequence $T_{i,l}$ of length $l \in L$ at position *i* = 1, ..., *n*. The largest of the minimum normalized metric distances at each position *i* = 1, ..., *n* can then be added to set 412. In other words, set 412 can include the largest value, i.e. the maximum, of the minimum normalized metric distances at each position *i* = 1, ..., *n*.

The determining of the normalized metric distances in step 402 can further be based on a triangular matrix with cumulative inner products of subsequences in the time series, and a vector with cumulative sums of subsequences in the time series to speed-up the initialization step. The triangular matrix $M$ can for example be an upper triangular matrix of size $(n + 1) \times (n + 1)$, where $n$ is the total length of the time series, where $M_{0,j} = 0$ for $0 \leq j \leq n + 1$, and where $M_{i,j} = M_{i-1,j-1} + T_{i-1} \cdot T_{j-1}$ for $0 < i \leq j \leq n + 1$. The vector of cumulative sums can for example be a vector $s$ of length $n + 1$, where $s_0 = 0$, and where $s_i = s_{i-1} + T_{i-1}$ for $i = 1, ..., n + 1$.

As such, matrix $M$ and vector $s$ can be used to determine the inner product, the mean, and the variance of two subsequences respectively as

$$\langle T_{i,l} | T_{j,l} \rangle = M_{i,j} - M_{i-l,j-l} \qquad \text{(Eq. 5)}$$

$$\mu_{i,l} = \frac{s_i - s_{i-l}}{l} \qquad \text{(Eq. 6)}$$

$$Var(T_{i,l}) = \frac{\langle T_{i,l} | T_{j,l} \rangle}{l} - \mu_{i,l}^2 \qquad \text{(Eq. 7)}$$

for $0 < l \leq i \leq n$. By determining the inner product, the mean, and the variance in this manner, the normalized metric distances 441, 442, 443, 444 can be determined more efficiently. This can reduce the execution time of determining the metric distances, i.e. speed-up the distance calculations. Thereby the initialization step can be expedited and can be more computationally efficient.

In a following step 403, the predetermined threshold value $Th$ 413 can be set to a predetermined percentile $p$ of the set of normalized metric distances 412. The predetermined percentile $p$ can for example be the 90th, 95th, or the 97.8th percentile. The subsequences $T_{i,l}$ and $T_{j,l}$ associated with the normalized metric distances in set 412 that exceed the set threshold value 413 can thus be the historical anomalies of the time series, i.e. the previous anomalies.

In a next step 404, a selection threshold $Th_{select}$ 414 can be set as a factor $q$ of the predetermined threshold value $Th$ 413. The selection threshold value $Th_{select}$ 414 can be at most 99%, preferably at most 75%, more preferably at most 60% of the predetermined threshold value $Th$ 413.

In a following step 405, the benchmark subsequences 415 can be obtained by selecting subsequences in the time series such that at least 80%, preferably at least 90%, more preferably at least 99% of all subsequences in the time series have a normalized metric distance smaller than the selection threshold $Th_{select}$ 414 to at least one of the selected subsequences, i.e. the benchmark subsequences 415. In other words, a substantial amount of all possible subsequences in the time series can be closer than the selection threshold 414 to at least one benchmark subsequence 415. As such, the benchmark subsequences 415 can be representative for a majority of the time series and, thus, the benchmark subsequences 415 can allow a reliable anomaly detection without keeping the entire time series in memory.

A smaller selection threshold $Th_{select}$ 414 results in a larger amount of selected benchmark subsequences 415 to represent a time series. This reduces the unwarranted retrieval of the entire time series as fewer false-positive anomalies are detected based on the benchmark subsequences. A false-positive anomaly can for example be a moving subsequence $T_l$ that triggers the retrieving of the entire time series in step 206 of Fig. 2, but turns out not to be an anomaly upon comparing that moving subsequence $T_l$ to the entire time series in step 208 of Fig. 2. On the other hand, a smaller selection threshold $Th_{select}$ 414 results in larger memory usage as more benchmark subsequences are stored.

As such, the selection threshold $Th_{select}$ 414 can preferably be iteratively adjusted during step 405, e.g. by adjusting factor $q$, to optimize the balance between false-positive anomaly detection and memory-efficiency. In other words, to optimize the balance between memory usage and unwarranted retrieval of the time series. To this end, the selecting of benchmark subsequences can preferably start with a substantially small selection threshold $Th_{select}$ 414, e.g. $Th_{select} = 0.75 * Th$. If the resulting selection of benchmark subsequences 415 exceeds a maximum selection size, the selecting of benchmark subsequences is repeated with a larger selection threshold $Th_{select}$ 414, e.g. $Th_{select} = 0.80 * Th$, until a selection of benchmark subsequences is obtained that is within the maximum selection size. The maximum selection size can for example be a maximum amount of subsequences, a maximum amount of stored values, or a maximum memory usage.

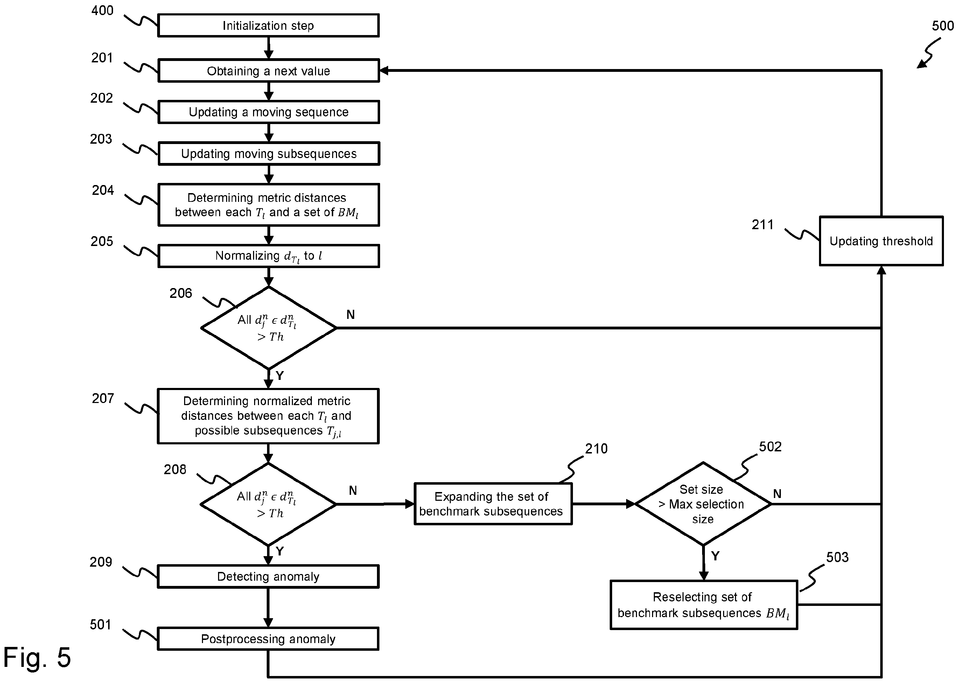

Fig. 5 shows further steps 500 according to a computer implemented method for detecting an anomaly in a time series according to an embodiment. The detected anomalies in step 209 can further be postprocessed in step 501 to remove overlaps with other detected anomalies. Detected anomalies of respective distinct lengths can overlap as the moving subsequences $T_l$ partially overlap. The postprocessing can resolve such overlaps and can define the boundaries of the respective anomalies. The postprocessing can include, amongst others, merging one or more detected anomalies and setting the boundaries of detected anomalies.

Expanding one or more sets of benchmark subsequences in step 210 can result in a set size that becomes too large over time. As such, all benchmark subsequences can be reselected in step 503 when the sets of benchmark subsequences exceed the maximum selection size. This allows to keep the anomaly detection memory-efficient over time. The reselecting in step 503 can be substantially similar to the obtaining of the sets of benchmark subsequences during the initialization step 400, i.e. steps 404 and 405 in Fig. 4.

The steps of the above computer implemented method for detecting an anomaly in a time series, e.g. as illustrated in Fig. 2 and 5, can further simultaneously be performed for a plurality of time series. Therefore, a distinct predetermined threshold value $Th$ and distinct sets of benchmark subsequences can be obtained for each one of the plurality of time series. The predetermined threshold value and sets of benchmark subsequences can for example be obtained by performing the initialization step 400 for each one of the plurality of time series.

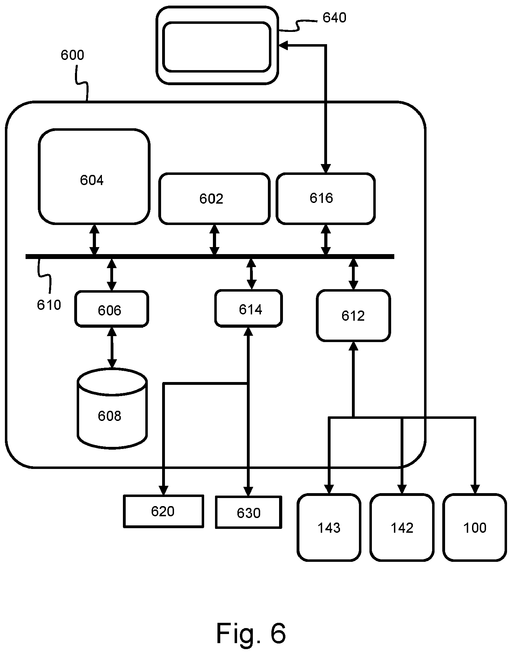

Fig. 6 shows a suitable computing system 600 enabling to implement embodiments of the above described method according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems such as for example, amongst others, a data server 143, a control device 142, or a telecommunications network 100. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer implemented method for detecting an anomaly in a time series (220), comprising:

   - obtaining (201) a next value (260) of the time series;

- updating (202) a moving sequence (221, 261) of stored most recent values of the time series with the next value;
- updating (203) moving subsequences (223, 224, 225) of distinct lengths from the moving sequence, wherein the moving subsequences end with the next value;
- for each respective one of the distinct lengths, determining (204) metric distances (234, 244, 254) between the moving subsequence of the respective one of the distinct lengths and a set of benchmark subsequences (230, 240, 250) of the respective one of the distinct lengths, thereby obtaining sets of metric distances (264) respectively associated with the distinct lengths;
- normalizing (205) the metric distances in the sets of metric distances according to the respectively associated distinct lengths, thereby obtaining sets of normalized metric distances (265);
- if all normalized metric distances in at least one set of normalized metric distances (265) exceed a predetermined threshold value:

  - retrieving previous values (222) of the time series preceding the moving sequence (221);
  - for each respective one of the distinct lengths, determining (207) updated normalized metric distances between the moving subsequence of the respective one of the distinct lengths and all possible subsequences within the previous values (222), and updating the sets of normalized metric distances (265) with the updated normalized metric distances;
  - if all normalized metric distances in an updated set of normalized metric distances (266) exceed the predetermined threshold value, detecting (209) an anomaly in the time series;
  - else, expanding (210) the respective set of benchmark subsequences with a select one of the possible subsequences having a minimal normalized metric distance; and

- updating (211) the predetermined threshold value based on the normalized metric distances.

2. A computer implemented method according to claim 1, wherein a set of benchmark subsequences (230) of a distinct length comprises one or more benchmark subsequences (231, 232, 233) of previous values (222) of the timeseries.

3. A computer implemented method according to claim 2, wherein the sets of benchmark subsequences (230, 240, 250) are stored as an array of selected time series values (320) and a collection of key-value pairs (310), wherefrom the respective one or more benchmark subsequences are obtainable.

4. A computer implemented method according to any of the preceding claims, wherein the normalized metric distance between at least 80%, preferably at least 90%, more preferably at least 99% of all possible subsequences in the time series and at least one benchmark subsequence is smaller than a selection threshold (414).

5. A computer implemented method according to any of the preceding claims, further comprising initializing the predetermined threshold value (413) and obtaining the sets of benchmark subsequences (415) during an initialization step (400), based on the stored previous values (222) of the time series.

6. A computer implemented method according to claim 5, wherein initializing the predetermined threshold value (413) for a time series comprises:

  - obtaining (401) stored previous values (222) of the time series;
  - for each respective one of the distinct lengths, determining (402) the normalized metric distance between each subsequence of the respective one of the distinct lengths in the time series and all non-overlapping subsequences of the respective one of the distinct lengths in the time series, thereby obtaining a set of normalized metric distances (412) in the time series; and
  - setting (403) the predetermined threshold value to a predetermined percentile of the set of normalized metric distances.

7. A computer implemented method according to claim 6, wherein determining (402) the normalized metric distances during the initialization step (400) is based on a triangular matrix with cumulative inner products of subsequences in the time series, and a vector with cumulative sums of subsequences in the time series to speed-up the initialization step.

8. A computer implemented method according to any of the preceding claims, wherein the determining (204, 207) of metric distances is interrupted when for each respective one of the distinct lengths at least one normalized metric distance is determined that is smaller than the predetermined threshold value (413).

9. A computer implemented method according to any of the preceding claims, further comprising reselecting (503) the sets of benchmark subsequences (230, 240, 250) when the sets exceed a maximum size.

10. A computer implemented method according to any of the preceding claims, further comprising postprocessing (501) detected anomalies to remove overlaps with other detected anomalies.

11. A computer implemented method according to any of the preceding claims, wherein the distance metric is a Euclidean distance, a z-normalized Euclidean distance, a centred Euclidean distance, or determined by dynamic time warping.

12. A computer implemented method according to any of the preceding claims, wherein a sequence is represented as a symbolic aggregate approximate, SAX, representation, or a piecewise aggregate approximation, PAA, representation.

13. A data processing system configured to perform the computer implemented method according to any one of claims 1 to 12.

14. A computer program comprising instructions which, when the program is executed by a computer, cause the computer to perform the computer implemented method according to any one of claims 1 to 12.

15. A computer-readable medium comprising instructions which, when executed by a computer, cause the computer to perform the computer implemented method according to any one of claims 1 to 12.

Fig. 1

EP 4 242 881 A1

200

Obtaining a next value — 201
$x_i$ — 260

Updating a moving sequence — 202
$[x_{i-L_{max}} \dots x_i]$ — 261

Updating moving subsequences — 203
$T_l = [x_{i-l} \dots x_i]$ — 262
$L_{min} \le l \le L_{max}$ — 263

Determining metric distances between each $T_l$ and a set of $BM_l$ — 204
$d_{T_l} = [d_1(T_l, BM_{1,l}); d_2(T_l, BM_{2,l}); \dots d_j(T_l, BM_{j,l})]$ — 264

Normalizing $d_{T_l}$ to $l$ — 205
$d_{T_l}^n = [d_1^n; d_2^n; \dots d_j^n]$ — 265

All $d_j^n \in d_{T_l}^n > Th$ — 206   N   Y

Updating threshold — 211

Determining normalized metric distances between each $T_l$ and possible subsequences $T_{j,l}$ — 207
$d_{T_l}^n = [d_1^n(T_l, T_{1,l}) \dots d_j^n(T_l, T_{j,l})]$ — 266

All $d_j^n \in d_{T_l}^n > Th$ — 208   N   Y

Expanding the set of benchmark subsequences — 210

Detecting anomaly — 209

220  221  222  223  224  225

230  231  232  233  234  223
240  241  242  243  244  224
250  251  252  254  225

Fig. 2

15

300

310

320

311    312    321

| 0 | 0 |
| 10 | 3 |
| 100 | 5 |
| 150 | 9 |
| 180 | 12 |
| 210 | 15 |
| ... | ... |

**Fig. 3A**

330    222    221

$L_{max}$

$T_{j,l}$    $T_l$

$i-l$    $i$    $n-l$    $n$

220    340    225

341    342    343    344    351

**Fig. 3B**

EP 4 242 881 A1

400

401 — Obtaining stored previous values

$[x_1 \dots x_n]$ — 411

402 — Determining normalized metric distances between each subsequence $T_{i,l}$ and other possible subsequences $T_{j,l}$

$d^n_{T_{i,l}, T_{j,l}} = [d^n_1, d^n_2, \dots, d^n_m]$ — 412

$\forall\, l \in L$

403 — Setting predetermined threshold value

$Th = d_k$ — 413

404 — Setting selection threshold

$Th_{select} = q * Th$ — 414

405 — Obtaining sets of benchmark subsequences

$BM_l$ — 415

420

222

$n$

$T_{i,l}$     $T_{j,l}$

$i - l$     $i$     $j - l$     $j$

430

431

432

433

$d^n_1$ — 441

$d^n_2$ — 442

$d^n_3$ — 443

$d^n_m$ — 444

434

17

Fig. 4

400 — Initialization step

500

201 — Obtaining a next value

202 — Updating a moving sequence

203 — Updating moving subsequences

204 — Determining metric distances between each $T_l$ and a set of $BM_l$

211 — Updating threshold

205 — Normalizing $d_{T_l}$ to $l$

206 — All $d_j^n \in d_{T_l}^n > Th$   — N

Y

207 — Determining normalized metric distances between each $T_l$ and possible subsequences $T_{j,l}$

208 — All $d_j^n \in d_{T_l}^n > Th$   — N → 210 — Expanding the set of benchmark subsequences → 502 — Set size > Max selection size   — N

Y

Y

209 — Detecting anomaly

503 — Reselecting set of benchmark subsequences $BM_l$

501 — Postprocessing anomaly

Fig. 5

Fig. 6

Europäisches Patentamt

European Patent Office

Office européen des brevets

# EUROPEAN SEARCH REPORT

Application Number

EP 22 16 0830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WENTAI WU ET AL: "Developing an Unsupervised Real-time Anomaly Detection Scheme for Time Series with Multi-seasonality", ARXIV.ORG, CORNELL UNIVERSITY LIBRARY, 201 OLIN LIBRARY CORNELL UNIVERSITY ITHACA, NY 14853, 23 April 2021 (2021-04-23), XP081921726, DOI: 10.1109/TKDE.2020.3035685 section IV; * abstract; figure 2 * | 1-15 | INV. G06F17/18 |
| A | LINARDI MICHELE ET AL: "Matrix profile goes MAD: variable-length motif and discord discovery in data series", JOURNAL OF DATA MINING AND KNOWLEDGE DISCOVERY, NORWELL, MA, US, vol. 34, no. 4, 7 May 2020 (2020-05-07), pages 1022-1071, XP037173755, ISSN: 1384-5810, DOI: 10.1007/S10618-020-00685-W [retrieved on 2020-05-07] * section 4 * | 1-15 | |
| A | DINAL HERATH J ET AL: "RAMP: Real-Time Anomaly Detection in Scientific Workflows", 2019 IEEE INTERNATIONAL CONFERENCE ON BIG DATA (BIG DATA), IEEE, 9 December 2019 (2019-12-09), pages 1367-1374, XP033721062, DOI: 10.1109/BIGDATA47090.2019.9005653 [retrieved on 2020-02-20] * section V * | 1-15 | TECHNICAL FIELDS SEARCHED (IPC) G06F |

The present search report has been drawn up for all claims

| Place of search | Date of completion of the search | Examiner |
|---|---|---|
| Berlin | 24 August 2022 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)